# NEW EUROPEAN PATENT SPECIFICATION

(11) **EP 2 079 792 B2**
(45) Date of publication and mention of the opposition decision: **12.09.2018**
(45) Mention of the grant of the patent: 05.08.2015
(21) Application number: 07822095.1
(22) Date of filing: 31.10.2007
(51) Int. Cl.: C08K 5/13, C08L 65/00, H01G 9/02, H01G 11/48

(54) **LAYER CONFIGURATION WITH IMPROVED STABILITY TO SUNLIGHT EXPOSURE**
SCHICHTAUFBAU MIT VERBESSERTER STABILITÄT GEGENÜBER DER EINWIRKUNG VON SONNENLICHT
CONFIGURATION DE COUCHE AYANT UNE STABILITÉ AMÉLIORÉE À L'EXPOSITION À LA LUMIÈRE SOLAIRE

(30) Priority: 06.11.2006 US 864523 P
(43) Date of publication of application: 22.07.2009
(73) Proprietor: Agfa-Gevaert N.V., 2640 Mortsel (BE)
(72) Inventor: LOUWET, Frank, 2640 Mortsel (BE); BOLLENS, Louis, 2640 Mortsel (BE)
(74) Representative: Goedeweeck, Rudi
(86) International application number: PCT/EP2007/061748
(87) International publication number: WO 2008/055834

(56) References cited:
- EP-A1- 1 993 113
- WO-A-2004/018560
- WO-A1-2004/114326
- WO-A1-2007/097364
- WO-A2-2004/021366
- JP-A- 2006 117 906
- JP-A- 2006 265 297
- JP-A- 2006 291 133
- US-A1- 2003 170 454
- US-A1- 2004 025 951
- US-A1- 2006 076 541
- DATABASE CA [Online] CHEMICAL ABSTRACTS SERVICE, COLUMBUS, OHIO, US; 13 July 2007 (2007-07-13), YOSHIDA, KAZUYOSHI ET AL: "Low-impedance solid electrolytic capacitor having electric conductivity improver on interface between dielectric layer and cathode and manufacture thereof" XP002465382 retrieved from STN Database accession no. 2007:760142 -& JP 2007 180259 A (SHIN-ETSU POLYMER CO., LTD., JAPAN) 12 July 2007 (2007-07-12)
- DATABASE CA [Online] CHEMICAL ABSTRACTS SERVICE, COLUMBUS, OHIO, US; 26 October 2006 (2006-10-26), YASUSHI, TARIKU ET AL: "Electrically conductive polymer coating, manufacture method thereof, and conductive crosslinked coating thereof" XP002465383 retrieved from STN Database accession no. 2006:1118888 & JP 2006 291133 A (SHIN-ETSU POLYMER CO., LTD., JAPAN) 26 October 2006 (2006-10-26)
- FALBE J.; REGITZ M. (EDS.): "Römpp Chemie Lexikon, Bd. 2, 9. Auflage, Cm-G, Dielektrizitätskonstante" 1990, GEORG THIEME VERLAG , STUTTGART, DE , XP002465381 Pages 955-956, entry for 'dielectric constant'
- OUYANG J ET AL: "On the mechanism of conductivity enhancement in poly(3,4-ethylenedioxythiophene):poly(styr ene sulfonate) film through solvent treatment" POLYMER, ELSEVIER SCIENCE PUBLISHERS B.V, GB, vol. 45, no. 25, November 2004 (2004-11), pages 8443-8450, XP004648666 ISSN: 0032-3861 cited in the application

## Description

### Field of the invention

The present invention relates to a composition and layer configuration with improved stability to visible and UV light exposure at high surface conductivity.

### Background of the invention.

Polythiophenes have been studied extensively due to their interesting electrical and/or optical properties. Polythiophenes become electrically conducting upon chemical or electrochemical oxidation or reduction.

EP-A 339 340 discloses a polythiophene containing structural units of the formula: 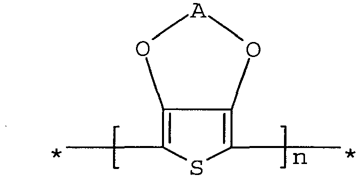 in which A denotes an optionally substituted C₁₋₄-alkylene radical and its preparation by oxidative polymerization of the corresponding thiophene.

EP-A 440 957 discloses dispersions of polythiophenes, constructed from structural units of formula (I): 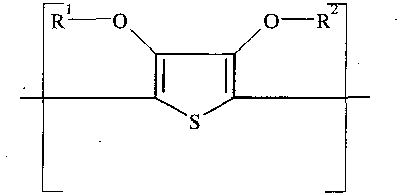 in which R¹ and R² independently of one another represent hydrogen or a C₁₋₄-alkyl group or together form an optionally substituted C₁₋₄-alkylene residue, in the presence of polyanions.

EP-A 686 662 discloses mixtures of A) neutral polythiophenes with the repeating structural unit of formula (I), 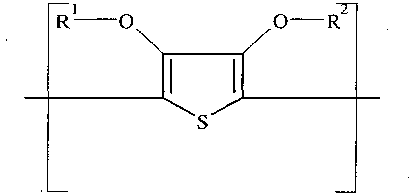 in which R¹ and R² independently of one another represent hydrogen or a C1-C4 alkyl group or together represent an optionally substituted C1-C4 alkylene residue, preferably an optionally with alkyl group substituted methylene, an optionally with C1-C12-alkyl or phenyl group substituted 1,2-ethylene residue or a 1,2-cyclohexene residue, and B) a di- or polyhydroxy- and/or carboxy groups or amide or lactam group containing organic compound; and conductive coatings therefrom which are tempered to increase their resistance preferably to < 300 ohm/square. Examples of di- and polyhydroxy organic compounds disclosed in EP-A 0 686 662 are: sugar and sugar derivatives, such as saccharose, glucose, fructose, lactose, sugar alcohols, such as sorbitol and mannitol, and alcohols such as ethylene glycol, glycerine, diethylene glycol and triethylene glycol.

WO 04/018560A discloses a layer configuration on a support, said layer configuration comprising a layer containing a polymer containing optionally substituted 3,4-alkylenedioxythiophene structural units, in which said two alkoxy groups may be the same or different or together represent an optionally substituted oxy-alkylene-oxy bridge, and a compound selected from the group consisting of polyphosphoric acids, polyphosphoric acid salts, thia-alkanedicarboxylic acids, cyclohexadiene compounds and polyhydroxy-compounds selected from the group consisting of tetronic acid derivatives; ortho-dihydroxybenzene compounds with at least one sulpho group, compounds according to formula (I):

HO-CH₂-CH(OH)-(CH₂)ₘ-S-CH₂-C(R¹) (R²)-CH₂-S-(CH₂)ₙ-CH(OH)-CH₂-OH (I)

wherein R¹ and R² are independently H, -OH or alkyl, and n and m are independently 1, 2 or 3; compounds according to formula (II):

HO-(CH₂)ₚ-S-CH₂-S-(CH₂)_{q}-OH (II)

wherein p and q are independently 2, 3 or 4; compounds hydrolyzable to tetronic acid derivatives; compounds hydrolyzable to compounds according to formula (I); and sulpho-substituted 2-thia-alkyl-benzimidazole compounds.

J. Ouyang et al. in 2004 in Polymer, volume 45, pages 8443 to 8450 reports conductivity enhancement of PEDOT:PSS films when solid components such as meso-erithritol (melting point 123°C) or 1,2,4-benzene-triol (melting point 140°C) are added to the PEDOT:PSS aqueous solution, the conductivity enhancement being observed only after the PEDOT:PSS film is baked at 150°C for 30 minutes.

US 2006/0076541A1 discloses a conductive composition comprising: a π-conjugated conductive polymer, a polyanion, and a hydroxy group-containing aromatic compound containing two or more hydroxy groups. In a preferred embodiment the polyhydroxyl group-containing aromatic compound is represented by formula (1): 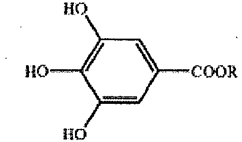 wherein R represents a group selected from a linear or branched alkyl group, an alkenyl group, a cycloalkenyl group, an aryl group, or an aralkyl group, each having 1 to 15 carbon atoms. In a further preferred embodiment the hydroxy group-containing aromatic compound contains a sulfo group and/or a carboxy group. US 2006/0076541A1 discloses that since each conductive composition, antistatic coating material, and solid electrolyte layer of a capacitor contains a hydroxy group-containing aromatic compound, high conductivity and heat resistance are shown.

A general drawback of electroconductive layers containing poly(3,4-dialkoxythiophene) polymers in the presence of a polyanion is the rapid increase in their surface resistance upon exposure to visible and UV light and too low electrical conductivity for many applications.

### Prior art:

Heretofore, the following prior art documents are known to the applicant:
EP-A 0 339 340 published on November 2, 1989
EP-A 0 440 957 published on August 14, 1991
EP-A 0 686 662 published on December 13, 1995
WO 04/018560A published on March 4, 2004
J. Ouyang et al., in Polymer Volume 45, pages 8443 to 8450, published in October 2004
US 2006/0076541A1 published on April 13, 2006.

### Aspects of the invention

It is therefore an aspect of the present invention to provide electroconductive layers containing poly(3,4-dialkoxythiophene) polymers in the presence of a polyanion which both do not undergo a rapid increase in their surface resistance upon exposure to visible and ultraviolet light and exhibit high electrical conductivity.

Further aspects and advantages of the invention will become apparent from the description hereinafter.

### Summary of the invention

It has been surprisingly found that addition of aliphatic polyhydroxy compounds, as defined in claims 1 to 3, to conductive compositions comprising: a poly(3,4-dialkoxythiophene) polymers, a polyanion, and at least one aromatic compound exclusive of sulfo groups and containing at least two hydroxy groups, as defined in claims 1 to 3, provide layers and prints with a surprising increase in electrical conductivity while not affecting or improving the stability of such layers or prints to exposure to UV-light and to high temperatures and high humidities.

Aspects of the present invention have been realized by compositions as defined in claims 1 to 3.

Aspects of the present invention are also realized by a layer configuration on a support, the layer configuration as defined in claims 6 to 8.

Preferred embodiments are disclosed in the dependent claims.

### Definitions

The term alkyl means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethylpropyl, 2,2-dimethylpropyl and 2-methyl-butyl etc.

The term thia-alkyl means a thia-alkyl group with one or more sulphur atoms in the alkyl chain e.g. 2,6-dithia-octyl, 3,6-dithia-octyl, 1,4-dithia-octyl, 1,4-dithiahexyl and 1,4,7-trithia-heptyl.

The term aqueous for the purposes of the present invention means containing at least 60% by volume of water, preferably at least 80% by volume of water, and optionally containing water-miscible organic solvents such as alcohols e.g. methanol, ethanol, 2-propanol, butanol, iso-amyl alcohol, octanol, cetyl alcohol etc.; glycols e.g. ethylene glycol; glycerine; N-methyl pyrrolidone; methoxypropanol; and ketones e.g. 2-propanone and 2-butanone etc.

The term polyhydroxy means 2 or more hydroxy-groups.

The term carboxy as used in disclosing the present invention is a carboxylic acid group or a salt thereof.

The term sulfo as used in disclosing the present invention is a sulfonic acid group or a salt thereof.

The abbreviation PEDOT represent poly(3,4-ethylenedioxy-thiophene).

The abbreviation PSS represents poly(styrenesulphonic acid) or poly(styrenesulphonate).

The term e-paper as used in disclosing the present invention is a portable, reusable storage and display medium that looks like paper but can be repeatedly written on (refreshed) - by electronic means - thousands or millions of times. E-paper will be used for applications such as e-books, electronic newspapers, portable signs, and foldable, rollable displays. Information to be displayed is downloaded through a connection to a computer or a cell phone, or created with mechanical tools such as an electronic "pencil". There are a number of different technologies being developed: Xerox, in partnership with 3M, has created an e-paper called Gyricon and Lucent, in partnership with a company called E Ink, is working on a device (also called E Ink) that is expected to be available within the next few years. Both of these technologies enable a black (or other color) and white display. The Gyricon version consists of a single sheet of transparent plastic, containing millions of tiny bichromal (two color) beads in oil-filled pockets. Lucent's E Ink device uses electronic ink and combines thin, plastic, flexible transistors with polymer LEDs (light-emitting diodes) to create what are called smart pixels.

The term touch screen as used in disclosing the present invention is a computer display screen that is sensitive to human touch, allowing a user to interact with the computer by touching pictures or words on the screen. Touch screens are used with information kiosks, computer-based training devices, and systems designed to help individuals who have difficulty manipulating a mouse or keyboard. There are three types of touch screen technology: resistive, surface wave and capacitive.

### Composition

Aspects of the present invention have been realized by the compositions as defined in claims 1 to 3.

According to a first embodiment of the composition, according to the present invention, the composition further contains a dispersion medium.

According to a second embodiment of the composition, according to the present invention, the composition further contains an organic liquid as dispersion medium.

According to a third embodiment of the composition, according to the present invention, the composition further contains water as dispersion medium.

According to a fourth embodiment of the composition, according to the present invention, the composition further contains an aqueous medium.

According to a fifth embodiment of the composition, according to the present invention, the layer further contains a surfactant.

According to a sixth embodiment of the layer configuration, according to the present invention, the layer further contains a binder.

According to a seventh embodiment of the composition, according to the present invention, the layer further contains a cross-linking agent.

### Polymer containing optionally substituted 3,4-alkylenedioxythiophene monomer units

The polymer, according to the present invention, is selected from the group consisting of: poly(3,4-methylenedioxy-thiophene), poly(3,4-methylenedioxythiophene) derivatives, poly(3,4-ethylenedioxy-thiophene), poly(3,4-ethylenedioxy-thiophene) derivatives, poly(3,4-propylenedioxythiophene), poly(3,4-propylenedioxythiophene) derivatives, poly(3,4-butylenedioxythiophene), poly(3,4-butylenedioxythiophene) derivatives and copolymers therewith. The term derivatives used in disclosing the ninth embodiment of the composition, according to the present invention, means that the monomers are substituted.

According to a ninth embodiment of the composition, according to the present invention, the substituents for the oxy-alkylene-oxy bridge are alkyl, alkoxy, alkyloxyalkyl, alkyloxyalkylenecarboxy, alkyloxyalkylenesulfo, carboxy, alkylsulphonato and carboxy ester groups.

According to a tenth embodiment of the composition, according to the present invention, the optionally substituted oxy-alkylene-oxy bridge is a 1,2-ethylene group, an optionally alkyl-substituted methylene group, an optionally C₁₋₁₂-alkyl- or phenyl-substituted 1,2-ethylene group, a 1,3-propylene group or a 1,2-cyclohexylene group.

According to an eleventh embodiment of the composition, according to the present invention, the optionally substituted 3,4-alkylenedioxythiophene structural units are represented by formula (I) : 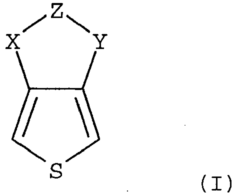 in which X and Y are O, Z is -(CH₂)ₘ-CR³R⁴-(CH₂)ₙ-; R³ is hydrogen or -(CH₂)ₛ-O-(CH₂)ₚ-SO₃⁻M⁺; R⁴ is -(CH₂)ₛ-O-(CH₂)ₚ-SO₃⁻M⁺; M⁺ is a cation; m and n are independently a whole number from 0 to 3; s is a whole number from 0 to 10; and p is a whole number from 1 to 18.

According to a twelfth embodiment of the composition, according to the present invention, the polymer containing optionally substituted 3,4-alkylenedioxythiophene structural units is a polythiophene according to formula (IV) 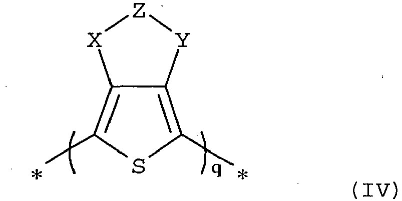 in which X and Y are O, Z is -(CH₂)ₘ-CR³R⁴-(CH₂)ₙ-; R³ is hydrogen or -(CH₂)ₛ-O-(CH₂)ₚ-SO₃⁻M⁺; R⁴ is -(CH₂)ₛ-O-(CH₂)ₚ-SO₃⁻M⁺; M⁺ is a cation; m and n are independently a whole number from 0 to 3; s is a whole number from 0 to 10; and p is a whole number from 1 to 18; and q is a whole number from 2 to 10,000.

According to a thirteenth embodiment of the composition, according to the present invention, the polymer containing optionally substituted 3,4-alkylenedioxythiophene structural units is poly[4-(2,3-dihydro-thieno[3,4-*b*][1,4]dioxin-2-ylmethoxy)-butane-1-sulphonic acid].

According to a fourteenth embodiment of the composition, according to the present invention, the polymer containing optionally substituted 3,4-alkylenedioxythiophene structural units is poly(3,4-ethylenedioxythiophene).

Polymers, according to the present invention, can be polymerized chemically or electrochemically. Chemical polymerization can be carried out oxidatively or reductively. The oxidation agents used for the oxidative polymerisation of pyrrole, as described, for example, in Journal of the American Chemical Society, volume 85, pages 454-458 (1963) and J. Polymer Science Part A Polymer Chemistry, volume 26, pages 1287-1294 (1988), can be utilized for the oxidative polymerization of such polymers.

Inexpensive and easily accessible oxidation agents such as iron(III) salts such as FeCl₃, the iron(III) salts of organic acids, e.g. Fe(OTs)₃, H₂O₂, K₂Cr₂O₇, alkali and ammonium persulphates, alkali perborates and potassium permanganate can be used in the oxidative polymerization.

Theoretically the oxidative polymerization of thiophenes requires 2.25 equivalents of oxidation agent per mole thiophene of formula (III) [see e.g. J. Polymer Science Part A Polymer Chemistry, volume 26, pages 1287-1294 (1988)]. In practice an excess of 0.1 to 2 equivalents of oxidation agent is used per polymerizable unit. The use of persulphates and iron(III) salts has the great technical advantage that they do not act corrosively. Furthermore, in the presence of particular additives oxidative polymerization to the polymers, according to the present invention, proceeds so slowly that the thiophenes and oxidation agent can be brought together as a solution or paste and applied to the substrate to be treated. After application of such solutions or pastes the oxidative polymerization can be accelerated by heating the coated substrate as disclosed in US 6,001,281 and WO 00/14139 herein incorporated by reference.

Reductive polymerization can be performed using the Stille (organotin) or Suzuki (organoboron) routes described in 2002 by Appperloo et al. in Chem. Eur. Journal, volume 8, pages 2384-2396, and as disclosed in 2001 in Tetrahedron Letters, volume 42, pages 155-157 and in 1998 in Macromolecules, volume 31, pages 2047-2056 respectively or with nickel complexes as disclosed in 1999 in Bull. Chem. Soc. Japan, volume 72, page 621 and in 1998 in Advanced Materials, volume 10, pages 93-116.

Optionally substituted 3,4-dialkoxythiophene monomer units, according to the present invention, can be chemically or electrochemically copolymerized with other thiophene monomer or polymerizable heterocyclic compounds such as pyrrole.

### Polyanion

According to a fifteenth embodiment of the composition, according to the present invention, the layer further contains a polyanion.

The polyanion compounds for use in the layer configuration, according to the present invention, are disclosed in EP-A 440 957 herein incorporated by reference and include polymeric carboxylic acids, e.g. polyacrylic acids, polymethacrylic acids, or polymaleic acids and polysulphonic acids, e.g. poly(styrene sulphonic acid). These polycarboxylic acids and polysulphonic acids can also be copolymers of vinylcarboxylic acids and vinylsulphonic acids with other polymerizable monomers, e.g. acrylic acid esters, methacrylic acid esters and styrene.

According to a sixteenth embodiment of the composition, according to the present invention, the layer further contains a polyanion which is poly(styrene sulphonate).

### Aromatic compounds exclusive of sulfo groups and containing at least two hydroxy groups

Aspects of the present invention have been realized by the compositions according to claims 1 to 3.

According to one embodiment of the present invention, the aromatic compound exclusive of sulfo groups and containing at least two hydroxy groups is selected from the group consisting of pyrogallol, gallic acid esters and polyhydroxy-benzoic acids.

Suitable aromatic compounds exclusive of sulfo groups and containing at least two hydroxy groups include:

| compound | | Melting point [°C] |
|---|---|---|
| 1 | pyrogallol | 133 |
| 5 | methyl gallate | 201-203 |
| 6 | ethyl gallate | |
| 7 | propyl gallate | 148-150 |
| 8 | 2,3,4-trihydroxybenzoic acid | 228 (decomp.) |
| 12 | 3,4-dihydroxybenzoic acid | 200-202 |
| 16 | 2,5-dihydroxybenzoic acid | 205 (decomp.) |
| | | 101-103 |
| | | 259-261 (decomp) |
| | | 218 |
| | | 140 |
| 24 | 3,5-dihydroxybenzoic acid | 236-238 (decomp) |
| 25 | 2,3-dihydroxybenzoic acid | 207-210 |
| 26 | 2,4-dihydroxybenzoic acid | 225-227 (decomp) |
| 27 | 2,6-dihydroxybenzoic acid | 165 (decomp.) |

### Polyhydroxy- and/or carboxy group or amide or lactam group containing aliphatic compound

Polyhydroxy aliphatic compounds are compounds with at least two hydroxy groups.

According to another embodiment of the present invention, the at least one polyhydroxy- and/or carboxy group or amide or lactam group containing aliphatic compound is selected from the group consisting of diethylene glycol, 1,2-propandiol, glycerol, hexylene glycol, propylene glycol, di(ethylene glycol)ethyl ether acetate (carbitol™ acetate), N-methylacetamide, N-methyl pyrrolidinone and sugar alcohols, such as sorbitol, mannitol, saccharose and fructose.

According still another embodiment of the present invention, the at least one polyhydroxy- and/or carboxy group or amide or lactam group containing aliphatic compound is selected from the group consisting of 1,2-propandiol, propylene glycol, diethylene glycol, formamide, N-methyl pyrrolidinone, di(ethylene glycol)ethyl ether acetate (carbitol™ acetate), and 2-pyrrolidone.

Suitable polyhydroxy- and/or carboxy group or amide or lactam group containing aliphatic compounds include:

| | Abbreviation |
|---|---|
| diethylene glycol | DEG |
| formamide | FA |
| N-methyl pyrrolidinone | NMP |
| di(ethylene glycol)ethyl ether acetate (carbitol™ acetate) | CA |
| 2-pyrolidone | 2-P |

### Surfactants

According to a twenty-second embodiment of the composition, according to the present invention, the layer further contains a non-ionic surfactant e.g. ethoxylated/fluroralkyl surfactants, polyethoxylated silicone surfactants, polysiloxane/polyether surfactants, ammonium salts of perfluro-alkylcarboxylic acids, polyethoxylated surfactants and fluorine-containing surfactants.

Suitable non-ionic surfactants include:

| | |
|---|---|
| Surfactant no. 01 = | ZONYL™ FSN, a 40% by weight solution of F(CF₂CF₂)₁₋₉CH₂CH₂O(CH₂CH₂O)ₓH in a 50% by weight solution of isopropanol in water where x = 0 to about 25, from DuPont; |
| Surfactant no. 02 = | ZONYL™ FSN-100: F(CF₂CF₂)₁₋₉CH₂CH₂O(CH₂CH₂O)ₓH where x = 0 to about 25, from DuPont; |
| Surfactant no. 03 = | ZONYL™ FS300, a 40% by weight aqueous solution of a fluorinated surfactant, from DuPont; |
| Surfactant no. 04 = | ZONYL™ FSO, a 50% by weight solution of a mixture of ethoxylated non-ionic fluoro-surfactant with the formula: F(CF₂CF₂)₁₋₇CH₂CH₂O(CH₂CH₂O)_{y}H where y = 0 to ca. 15 in a 50% by weight solution of ethylene glycol in water, from DuPont; |
| Surfactant no. 05 = | ZONYL™ FSO-100, a mixture of ethoxylated non-ionic fluoro-surfactant from DuPont with the formula: F(CF₂CF₂)₁₋₇CH₂CH₂O(CH₂CH₂O)_{y}H where y = 0 to ca. 15 from DuPont; |
| Surfactant no. 06 = | Tegoglide™ 410, a polysiloxane-polymer copolymer surfactant, from Goldschmidt; |
| Surfactant no. 07 = | Tegowet™, a polysiloxane-polyester copolymer surfactant, from Goldschmidt; |
| Surfactant no. 08 = | FLUORAD™FC431: CF₃(CF₂)₇SO₂(C₂H₅)N-CH₂CO-(OCH₂CH₂)ₙOH from 3M; |
| Surfactant no. 09 = | FLUORAD™FC126, a mixture of the ammonium salts of perfluorocarboxylic acids, from 3M; |
| Surfactant no. 10 = | Polyoxyethylene-10-lauryl ether |
| Surfactant no. 11 = | FLUORAD™FC430, a 98.5% active fluoroaliphatic ester from 3M; |

According to a twenty-third embodiment of the composition, according to the present invention, the layer further contains an anionic surfactant.

Suitable anionic surfactants include:

| | |
|---|---|
| Surfactant no. 12 = | ZONYL™ 7950, a fluorinated surfactant, from DuPont; |
| Surfactant no. 13 = | ZONYL™ FSA, 25% by weight solution of F(CF₂CF₂)₁₋₉CH₂CH₂SCH₂CH₂COOLi in a 50% by weight solution of isopropanol in water, from DuPont; |
| Surfactant no. 14 = | ZONYL™ FSE, a 14% by weight solution of [F(CF₂CF₂)₁₋₇CH₂CH₂O]ₓP(O)(ONH₄)_{y} where x = 1 or 2; y = 2 or 1; and x + y = 3 in a 70% by weight solution of ethylene glycol in water, from DuPont; |
| Surfactant no. 15 = | ZONYL™ FSJ, a 40% by weight solution of a blend of F(CF₂CF₂)₁₋₇CH₂CH₂O]ₓP(O)(ONH₄)_{y} where x = 1 or 2; y = 2 or 1; and x + y = 3 with a hydrocarbon surfactant in a 25% by weight solution of isopropanol in water, from DuPont; |
| Surfactant no. 16 = | ZONYL™ FSP, a 35% by weight solution of [F(CF₂CF₂)₁₋₇CH₂CH₂O]ₓP(O)(ONH₄)_{y} where x = 1 or 2; y = 2 or 1 and x + y = 3 in 69.2% by weight solution of isopropanol in water, from DuPont; |
| Surfactant no. 17 = | ZONYL™ UR: [F(CF₂CF₂)₁₋₇CH₂CH₂O]ₓP(O)(OH)_{y} where x = 1 or 2; y = 2 or 1 and x + y = 3, from DuPont; |
| Surfactant no. 18 = | ZONYL™ TBS: a 33% by weight solution of F(CF₂CF₂)₃₋₈CH₂CH₂SO₃H in a 4.5% by weight solution of acetic acid in water, from DuPont; |
| Surfactant no. 19 = | ammonium salt of perfluoro-octanoic acid from 3M. |

### Layer configuration

Aspects of the present invention are also realized by a layer configuration on a support, the layer configuration as defined in claims 6 to 8.

According to a first embodiment of the layer configuration, according to the present invention, the layer configuration is a light emitting diode.

According to a second embodiment of the layer configuration, according to the present invention, the layer configuration is a solar cell.

According to a third embodiment of the layer configuration, according to the present invention, the layer configuration is a touch screen.

According to a fourth embodiment of the layer configuration, according to the present invention, the layer configuration is an e-paper configuration.

### Electroluminescent phosphors

According to a fifth embodiment of the layer configuration, according to the present invention, the layer configuration further comprises a layer of an electroluminescent phosphor.

According to a sixth embodiment of the layer configuration, according to the present invention, the layer configuration further comprises a layer of an electroluminescent phosphor, wherein the electroluminescent phosphor belongs to the class of II-VI semiconductors e.g. ZnS, or is a combination of group II elements with oxidic anions, the most common being silicates, phosphates, carbonates, germanates, stannates, borates, vanadates, tungstates and oxysulphates. Typical dopants are metals and all the rare earths e.g. Cu, Ag, Mn, Eu, Sm, Tb and Ce.

According to a seventh embodiment of the layer configuration, according to the present invention, the layer configuration further comprises a layer of an electroluminescent phosphor, wherein the electroluminescent phosphor is encapsulated with a transparent barrier layer against moisture e.g. Al₂O₃ and AlN. Such phosphors are available from Sylvania, Shinetsu polymer KK, Durel, Acheson and Toshiba. An example of coatings with such phosphors is 72X, available from Sylvania/GTE, and coatings disclosed in US 4,855,189.

According to an eighth embodiment of the layer configuration, according to the present invention, the layer configuration further comprises a layer of an electroluminescent phosphor, wherein the electroluminescent phosphor is ZnS doped with manganese, copper or terbium, CaGa₂S₄ doped with cerium, electroluminescent phosphor pastes supplied by DuPont e.g.: LUXPRINT™ type 7138J, a white phosphor; LUXPRINT™ type 7151J, a green-blue phosphor; and LUXPRINT™ type 7174J, a yellow-green phosphor; and ELECTRODAG™ EL-035A supplied by Acheson.

According to a ninth embodiment of the layer configuration, according to the present invention, the layer configuration further comprises a layer of an electroluminescent phosphor, wherein the electroluminescent phosphor is a zinc sulphide phosphor doped with manganese and encapsulated with AlN.

### Dielectric layer

According to a tenth embodiment of the layer configuration, according to the present invention, the layer configuration further comprises a dielectric layer.

Any dielectric material may be used in the dielectric layer, with yttria and barium titanate being preferred e.g. the barium titanate paste LUXPRINT™ type 7153E high K dielectric insulator supplied by DuPont and the barium titanate paste ELECTRODAG™ EL-040 supplied by Acheson. A positive ion exchanger may be incorporated into the dielectric layer to capture any ions escaping from the phosphor of the light-emitting layer. The amount of ion exchanger in the dielectric layer has to be optimized so that it has a maximum effectiveness in reducing black spots while not reducing the initial brightness level. It is therefore preferred to add 0.5 to 50 parts by weight of ion exchanger to 100 parts by weight of the total amount of resin and dielectric material in the dielectric layer. The ion exchanger may be organic or inorganic.

Suitable inorganic ion exchangers are hydrated antimony pentoxide powder, titanium phosphate, salts of phosphoric acid and silicic acid and zeolite.

### Support

According to an eleventh embodiment of the layer configuration, according to the present invention, the support is transparent or translucent.

According to a twelfth embodiment of the layer configuration, according to the present invention, the support is paper, polymer film, glass or ceramic.

According to a thirteenth embodiment of the layer configuration, according to the present invention, the support is a transparent or translucent polymer film.

A transparent or translucent support suitable for use with the electroconductive or antistatic layers, according to the present invention, may be rigid or flexible and consist of a glass, a glass-polymer laminate, a polymer laminate, a thermoplastic polymer or a duroplastic polymer. Examples of thin flexible supports are those made of a cellulose ester, cellulose triacetate, polypropylene, polycarbonate or polyester, with poly(ethylene terephthalate) or poly(ethylene naphthalene-1,4-dicarboxylate) being particularly preferred.

### Electroluminescent devices

According to a fourteenth embodiment of the layer configuration, according to the present invention, the layer configuration is an electroluminescent device.

According to a fifteenth embodiment of the layer configuration, according to the present invention, the layer configuration is a light emitting diode.

Thin film electroluminescent devices (ELDs) are all characterized by one (or more) electroluminescent active layer(s) sandwiched between two electrodes. Optionally a dielectric layer may also be part of the sandwich.

Thin film ELDs can be subdivided into organic and inorganic based ELDs. Organic-based thin film ELDs can be subdivided into low molecular weight organic devices including ologomers (Organic Light Emitting Diodes (OLEDs)) and high molecular weight organic devices (Polymer Light Emitting Diodes (PLEDs). The inorganic ELDs on the other hand can be further subdivided into the High Voltage Alternating Current (HV-AC) ELDs and the Low Voltage Direct Current (LV-DC) ELDs. The LV-DC ELDs include Powder ELDs (DC-PEL Devices or DC-PELDs) and thin film DC-ELDs, hereinafter called Inorganic Light Emitting Diodes (ILEDs).

The basic construction of organic ELDs (PLED and OLED) comprises following layer arrangement : a transparent substrate (glass or flexible plastic), a transparent conductor, e.g. Indium Tin Oxide (ITO), a hole transporting layer, a luminescent layer, and a second electrode, e.g. a Ca, Mg/Ag or Al/Li electrode. For OLEDs the hole transporting layer and the luminescent layer are 10-50 nm thick and applied by vacuum deposition, whereas for PLEDs the hole transporting layer is usually about 40 nm thick and the luminescent layer is usually about 100 nm thick and applied by spin coating or other non-vacuum coating techniques. A direct voltage of 5 - 10 V is applied between both electrodes and light emission results from holes and electrons being injected from the positive and negative electrodes respectively combining in the luminescent layer thereby producing the energy to excite the luminescent species to emit light.

In OLEDs the hole transporting layer and electroluminescent layer consist of low molecular organic compounds, N,N'-diphenyl-1,1'-biphenyl-4,4'-diamine (TPD) can, for example be used as the hole transporter and aluminium (III) 8-hydroxyquinoline complex (Alq₃), polyaromatics (anthracene derivatives, perylene derivatives and stilbene derivatives) and polyhetero-aromatics (oxazoles, oxadiazoles, thiazoles etc.) can be used as electroluminescent compounds.

In PLEDs electroluminescent compounds that can be used are polymers like the non-conjugated polyvinylcarbazole derivatives (PVK) or conjugated polymers like poly(p-phenylene vinylenes) (PPV), polyfluorenes, poly(3-alkylthiophene), poly(p-phenylene ethynylenes) etc. These high-molecular-weight materials allow for the easy preparation of thin films by casting, and show a high resistance to crystallization.

Low voltage DC PEL Devices generally comprise a transparent substrate, a transparent conductor (ITO), a doped ZnS phosphor layer (20µm), and a top electrode of evaporated aluminium. The phosphor layer is applied by means of the doctor blade technique or screen printing on an ITO conducting layer. Subsequently an aluminium electrode is applied by evaporation. Upon applying a direct current voltage of several volts (ITO positive), holes start moving towards the aluminium electrode, thereby creating an insulating region (about 1 µm in thickness) next to the ITO layer within one minute or so. This results in a current drop which is associated with the onset of light emission. This process has been called the forming process. In the thin high resistive phosphor layer thereby formed, high electric fields occur and electroluminescence is already possible at low voltages (typically between 10 and 30 V). Que et al. [see Appl. Phys. Lett., volume 73, pages 2727-2729 (1998)] using ZnS:Cu nano crystals achieved turn on voltages of below 5 V.

In hybrid LEDs, inorganic emitting so-called quantum dots are used in combination with organic polymers with charge transporting properties and in some cases also emitting properties. Hybrid LEDs with CdSe nano particles have been reported by Colvin et al. [see Nature, volume 370, pages 354-357, (1994)], Dabbousi et al. [see Appl. Phys. Lett., volume 66, pages 1316-1318 (1995), and Gao et al. [see J. Phys. Chem. B, volume 102, pages 4096-4103 (1998)]; and with ZnS:Cu nano-crystals have been reported by Huang et al. [see Appl. Phys. Lett., volume 70, pages 2335-2337 (1997)] all included herein by reference.

### Photovoltaic devices

According to a sixteenth embodiment of the layer configuration, according to the present invention, the layer configuration is a photovoltaic device.

According to a seventeenth embodiment of the layer configuration, according to the present invention, the layer configuration is a solar cell.

According to an eighteenth embodiment of the layer configuration, according to the present invention, the layer configuration further comprises at least one photovoltaic layer. The photovoltaic layer may be an organic layer, a hybrid inorganic and organic layer or an inorganic layer.

Photovoltaic devices incorporating the layer configuration, according to the present invention, can be of two types: the regenerative type which converts light into electrical power leaving no net chemical change behind in which current-carrying electrons are transported to the anode and the external circuit and the holes are transported to the cathode where they are oxidized by the electrons from the external circuit and the photosynthetic type in which there are two redox systems one reacting with the holes at the surface of the semiconductor electrode and one reacting with the electrons entering the counter-electrode, for example, water is oxidized to oxygen at the semiconductor photoanode and reduced to hydrogen at the cathode. In the case of the regenerative type of photovoltaic cell, as exemplified by the Graetzel cell, the hole transporting medium may be a liquid electrolyte supporting a redox reaction, a gel electrolyte supporting a redox reaction, an organic hole transporting material, which may be a low molecular weight material such as 2,2',7,7'-tetrakis(N,N-di-p-methoxyphenyl-amine)9,9'-spirobifluorene (OMeTAD) or triphenylamine compounds or a polymer such as PPV-derivatives, poly(N-vinylcarbazole) etc., or inorganic semiconductors such as CuI, CuSCN etc. The charge transporting process can be ionic as in the case of a liquid electrolyte or gel electrolyte or electronic as in the case of organic or inorganic hole transporting materials.

Such regenerative photovoltaic devices can have a variety of internal structures in conformity with the end use. Conceivable forms are roughly divided into two types: structures which receive light from both sides and those which receive light from one side. An example of the former is a structure made up of a transparently conductive layer e.g. an ITO-layer or a PEDOT/PSS-containing layer and a transparent counter electrode electrically conductive layer e.g. an ITO-layer or a PEDOT/PSS-containing layer having interposed therebetween a photosensitive layer and a charge transporting layer. Such devices preferably have their sides sealed with a polymer, an adhesive or other means to prevent deterioration or volatilization of the inside substances. The external circuit connected to the electrically-conductive substrate and the counter electrode via the respective leads is well-known.

Organic photovoltaic layers of the layer configuration, according to the present invention are, for example, mixtures of fullerene molecules (as electron acceptor and electron transporter) with conjugated polymers (e.g. substituted polyphenylenevinylene (PPV) (as light absorber and hole transporter)[see Brabec et al., Adv. Funct. Mater., volume 11(1), pages 15 - 26 (2001)]. In 1995 Halls et al. reported in Nature, volume 376, page 498 the successful use of acceptor-type conjugated polymers instead of fullerenes.

Alternatively the layer configuration, according to the present invention, can be incorporated in hybrid photovoltaic compositions such as described in 1991 by Graetzel et al. in Nature, volume 353, pages 737-740, in 1998 by U. Bach et al. [see Nature, volume 395, pages 583-585 (1998)] and in 2002 by W. U. Huynh et al. [see Science, volume 295, pages 2425-2427 (2002)]. In all these cases, at least one of the components (light absorber, electron transporter or hole transporter) is inorganic (e.g. nano-TiO₂ as electron transporter, CdSe as light absorber and electron transporter) and at least one of the components is organic (e.g. triphenylamine as hole transporter or poly(3-hexylthiophene) as hole transporter).

Inorganic photovoltaic layers which can be used in the layer configuration according to this invention are described in EP-A 1 176 646.

### Transistors

According to a nineteenth embodiment of the layer configuration, according to the present invention, the layer configuration is a transistor.

According to a twentieth embodiment of the layer configuration, according to the present invention, the layer configuration further comprises a layer with one or more of the electron transporting or hole transporting components described above, but within such a configuration that it can be used as a transistor. The semiconductor can be n-type, p-type or both (ambipolar transistor) and can be either organic or inorganic.

### Industrial application

Layer configurations comprising a layer between a positive electrode and a material capable of hole transport and capable of reducing hole-electron recombination at the positive electrode can be used in a wide range of electronic devices such as photovoltaic devices, solar cells, batteries, capacitors, light emitting diodes, organic and inorganic electroluminescent devices, smart windows, electrochromic devices, sensors for organic and bio-organic materials and field effect transistors, touch screens and e-paper configurations [see also chapter 10 of the Handbook of Oligo- and Polythiophenes, Edited by D. Fichou, Wiley-VCH, Weinheim (1999)].

The invention is illustrated hereinafter by way of comparative and invention examples. The percentages and ratios given in these examples are by weight unless otherwise indicated.

Subbing layer Nr. 01 used in the LAYER CONFIGURATIONS exemplified below has the composition:

| | |
|---|---|
| copolymer of 88% vinylidene chloride, 10% methyl acrylate and 2% itaconic acid | 79.1% |
| Kieselsol® 100F, a colloidal silica from BAYER | 18.6% |
| Mersolat® H, a surfactant from BAYER | 0.4% |
| Ultravon® W, a surfactant from CIBA-GEIGY | 1.9% |

Ingredients used in the COMPARATIVE and REFERENCE LAYER CONFIGURATIONS:

### Polyhydroxy-compounds:

- DEG = diethylene glycol (disclosed in EP-A 686 662);
- TEG = triethylene glycol (disclosed in EP-A 686 662).

### COMPARATIVE EXAMPLES 1 and 2

The 0.5% by weight PEDOT/PSS compositions of COMPARATIVE EXAMPLE 1 and 2 were produced by adding the ingredients given in Table 1 to a 1.12% by weight aqueous dispersion of PEDOT/PSS with a PEDOT:PSS weight ratio of 1:2.46, which was produced under an inert atmosphere such that when said initiator is added less than 3mg of oxygen per litre of said reaction medium is present in said reaction medium as disclosed in WO 03/048227A, in the quantities to produce the compositions given in Table 1.

**Table 1:**

| | Comparative Example 1 | Comparative Example 2 |
|---|---|---|
| solid PEDOT/PSS (used as 1.12% by weight aqueous dispersion) [g] | 0.5 | 0.5 |
| Zonyl® FSO100 (used as 5% by weight aqueous solution) [g] | 0.0525 | 0.0525 |
| isopropanol [g] | 4.12 | 4.12 |
| DEG [g] | 5.83 | - |
| 3-glycidoxypropyltrimethoxysilane (Z6040 from Dow Chemical) [g] | 0.28 | 0.28 |
| deionized water [g] | 89.2175 | 95.0475 |
| composition [g] | 100 | 100 |

### COMPARATIVE EXAMPLES 3 to 13 and INVENTION EXAMPLES 1 to 3

The compositions of COMPARATIVE EXAMPLES 3 to 6 and INVENTION EXAMPLES 1 to 3 were produced by adding the ingredients given in Table 2 below in the quantities per 1.5 g PEDOT/PSS (solid) given in Table 2 below to the composition produced in COMPARATIVE EXAMPLE 1

**Table 2:**

| Comparative Example | Ingredient | Quantity of ingredient/1.5 g PEDOT/PSS (solid) [g] |
|---|---|---|
| 1 | - | - |
| 3 | hydroquinone | 0.48 |
| 4 | sodium hydroquinone sulphonate | 1 |
| 5 | sodium hydroquinone sulphonate | 2 |
| 6 | sodium hydroquinone sulphonate | 6 |
| Invention Example nr | | |
| 1 | compound 1 | 1.5 |
| 2 | compound 5 | 1 |
| 3 | compound 7 | 1 |

and the compositions of COMPARATIVE EXAMPLES 7 to 13 were produced by adding the ingredients given in Table 3 below in the quantities per 1.5 g PEDOT/PSS given in Table 2 below to the composition produced in COMPARATIVE EXAMPLE 2.

**Table 3:**

| Comparative Example | Ingredient | Quantity of ingredient/1.5 g PEDOT/PSS (solid) [g] |
|---|---|---|
| 7 | sodium hydroquinone sulphonate | 1 |
| 8 | hydroquinone | 0.48 |
| 9 | sodium hydroquinone sulphonate | 2 |
| 10 | sodium hydroquinone sulphonate | 6 |
| 11 | compound 1 | 1.5 |
| 12 | compound 5 | 1 |
| 13 | compound 7 | 1 |

The compositions of COMPARATIVE EXAMPLES 1 to 13 and INVENTION EXAMPLES 1 to 3 were coated on a 175 µm thick transparent PET sheet provided with subbing layer 1 on the side of the PET sheet being coated with a Braive coater at coating speed 2 with a barcoater giving a wet-layer thickness of 40 µm and the coatings dried for 3 minutes at 130°C. Two strips 45 mm wide were cut from the middle of the coated sheet for surface resistance experiments.

The surface resistances at room temperature were determined by contacting the outermost layer with parallel electrodes each 45 mm long and 45 mm apart capable of forming line contacts with copper electrodes via silver-filled rubber, the electrodes being separated by a teflon insulator. This enables a direct measurement of the surface resistance to be realized. The surface resistance of fresh untreated strips was performed on three occasions during the measurements. The results of these three measurements for each composition are summarized in Table 4 below.

These measurements show a surprising decrease in surface resistance in the presence of diethylene glycol for all of the aromatic compounds exclusive of sulfo groups and containing at least two hydroxy groups evaluated for all concentrations, the reduction ranging from a factor of 35 in the case of the lowest concentration of sodium hydroquinone sulphonate to varying 1.2 in the case of pyrogallol.

Totally consistent surface resistance measurements with no significant variation in the values measured were observed in the case of the compositions of INVENTION EXAMPLES 1 to 3, COMPARATIVE EXAMPLES 1, 3, 4, 5, 6, 8, 11, 12 and 13. However, very considerable variation in surface resistance values was observed in the case of COMPARATIVE EXAMPLES 7, 9 and 10 containing sodium hydroquinone sulphonate in the absence of diethylene glycol. However, the corresponding compositions with diethylene glycol did not exhibit this extreme variation in surface resistance, indicating that not only does the addition of diethylene glycol have the effect of reducing the surface resistance by a factor of at least 3, but also of stabilizing the surface resistance of the composition.

The layers were subjected to suntest-exposure for 24, 48, 72 and 96 hours in a SUNTEST CPS+ from Atlas with a low pressure Xenon lamp producing 765 W/m² and having a blackstandard T of 50C and surface resistance measurements carried out on the layers fresh, after 24, 48, 72 and 96 hours exposure in the SUNTEST CPS+, after 14 days at 125°C and after 14 days in a 90% relative humidity at 60°C.

**Table 4:**

| | Surface resistance [Ω/square] | | | | | |
|---|---|---|---|---|---|---|
| Comparative Example nr. | first measurement | second measurement | third measurement | average value | | Quantity of ingredient/1.5 g PEDOT/PSS [g] |
| 1 | 222 | 217 | 216 | 218 | | |
| 3 | 260.5 | 218 | 226 | 235 | sodium hydroquinone sulphonate | 1 |
| 4 | 211 | 223 | 221 | 218 | hydroquinone | 0.48 |
| 5 | 270 | 260 | 262 | 264 | sodium hydroquinone sulphonate | 2 |
| 6 | 371 | 383 | 371 | 375 | sodium hydroquinone sulphonate | 6 |
| Invention Example nr. | | | | | | |
| 1 | 225 | 231 | 228 | 228 | compound 1 | 1.5 |
| 2 | 224.5 | 219 | 219 | 221 | compound 5 | 1 |
| 3 | 230 | 228 | 220 | 226 | compound 7 | 1 |
| Comparative Example nr. | | | | | | |
| 2 | - | - | - | 12790 | | |
| 7 | 5635 | 6300 | 10770 | 7568 | sodium hydroquinone sulphonate | 1 |
| 8 | 310.5 | 309 | 309 | 309 | hydroquinone | 0.48 |
| 9 | 1262 | 2570 | 2030 | 1954 | sodium hydroquinone sulphonate | 2 |
| 10 | 590 | 874 | 1120 | 861 | sodium hydroquinone sulphonate | 6 |
| 11 | 271.5 | 282 | 263 | 272 | compound 1 | 1.5 |
| 12 | 383.5 | 388 | 394 | 388 | compound 5 | 1 |
| 13 | 398.5 | 376 | 364 | 379 | compound 7 | 1 |

The surface resistances of the layers of COMPARATIVE EXAMPLES 1 and 3 to 13 and INVENTION EXAMPLES 1 to 3 after 24h, 48h, 72h and 96h Suntest exposure in a SUNTEST CPS+ are summarized in Table 5 below:

**Table 5:**

| | Surface resistance [Ω/square] | | | | |
|---|---|---|---|---|---|
| Comparative Example nr. | fresh | increase factor after 24h Suntest | increase factor after 48h Suntest | increase factor after 72h Suntest | increase factor after 96h Suntest |
| 1 | 222 | 1.42 | 1.80 | 2.46 | 3.44 |
| 3 | 260.5 | 1.15 | 1.24 | 1.32 | 1.48 |
| 4 | 211 | 1.41 | 2.07 | 2.74 | 3.76 |
| 5 | 270 | 1.09 | 1.17 | 1.24 | 1.37 |
| 6 | 371 | 1.06 | 1.15 | 1.28 | 1.37 |
| Invention Example nr. | | | | | |
| 1 | 225 | 1.20 | 1.34 | 1.49 | 1.72 |
| 2 | 224.5 | 1.12 | 1.25 | 1.29 | 1.35 |
| 3 | 230 | 1.23 | 1.32 | 1.38 | 1.50 |
| Comparative Example nr. | | | | | |
| 2 | 12790 | 1.94 | 2.68 | 3.49 | 5.19 |
| 7 | 5635 | 1.22 | 1.47 | 1.75 | 2.07 |
| 8 | 310.5 | 1.62 | 2.06 | 2.95 | 4.91 |
| 9 | 1262 | 1.08 | 1.09 | 1.33 | 1.50 |
| 10 | 590 | 1.03 | 1.28 | 1.47 | 1.53 |
| 11 | 271.5 | 1.41 | 1.54 | 1.78 | 2.19 |
| 12 | 383.5 | 1.11 | 1.31 | 1.35 | 1.45 |
| 13 | 398.5 | 1.25 | 1.35 | 1.45 | 1.61 |

The benchmark in these stability mesurements is the performance of the composition to which the polyhydroxy-aromatic compound has not been added. Of the polyhydroxy-aromatic compounds tested only the compositions with hydroquinone exhibited poorer stability than the composition to which no polyhydroxy-aromatic compound has been added. The layers with pyrogallol, methyl gallate, propyl gallate and sodium hydroquinone sulphonate all exhibited high stability under exposure in a SUNTEST CPS+. However, the compositions containing sodium hydroquinone sulphonate exhibited significantly higher surface resistances.

The surface resistances of the layers of COMPARATIVE EXAMPLES 1 and 3 to 13 and INVENTION EXAMPLES 1 to 3 after 14 days in ambient relative humidity at 125°C are summarized in Table 6 below:

**Table 6:**

| | Surface resistance [Ω/square] | | |
|---|---|---|---|
| Comparative Example nr. | fresh | after 14 days at 125°C | increase factor after 14 days at 125°C |
| 1 | 217 | 445 | 2.05 |
| 3 | 218 | 289 | 1.33 |
| 4 | 223 | 423 | 1.90 |
| 5 | 260 | 302 | 1.16 |
| 6 | 383 | 453 | 1.18 |
| Invention Example nr. | | | |
| 1 | 231 | 367 | 1.59 |
| 2 | 219 | 288 | 1.32 |
| 3 | 228 | 308 | 1.35 |
| Comparative Example nr. | | | |
| 7 | 6300 | 15830 | 2.51 |
| 8 | 309 | 648 | 2.10 |
| 9 | 2570 | 2770 | 1.08 |
| 10 | 874 | 2620 | 3.00 |
| 11 | 282 | 486 | 1.72 |
| 12 | 388 | 541 | 1.39 |
| 13 | 376 | 508 | 1.35 |

The benchmark in these stability mesurements is again the performance of the composition to which the polyhydroxy-aromatic compound has not been added. Of the polyhydroxy-aromatic compounds tested only compositions without diethylene glycol exhibited poorer stability and then only in the case of sodium hydroquinone sulphonate and hydroquinone. Moreover, the compositions containing sodium hydroquinone sulphonate exhibited significantly higher surface resistances.

The surface resistances of the layers of COMPARATIVE EXAMPLES 1 and 3 to 13 and INVENTION EXAMPLES 1 to 3 after 14 days in 90% relative humidity at 60°C are summarized in Table 7 below.

In the absence of diethylene glycol compositions with sodium hydroquinone and methyl gallate surprisingly exhibited reductions in surface resistance after 14 days in 90% relative humidity at 60°C. The reason for this reduction in surface resistance is unknown.

**Table 7:**

| | Surface resistance [Ω/square] | | |
|---|---|---|---|
| Comparative Example nr. | fresh | after 14 days in 90% relative humidity at 60°C | increase factor after 14 days in 90% relative humidity at 60°C |
| 1 | 216 | 324 | 1.50 |
| 3 | 226 | 269 | 1.19 |
| 4 | 221 | 389 | 1.76 |
| 5 | 262 | 340 | 1.30 |
| 6 | 371 | 524 | 1.41 |
| Invention Example nr. | | | |
| 1 | 228 | 306 | 1.34 |
| 2 | 219 | 257 | 1.17 |
| 3 | 220 | 256 | 1.16 |
| Comparative Example nr. | | | |
| 7 | 10770 | 361 | 0.03 |
| 8 | 309 | 390 | 1.26 |
| 9 | 2030 | 425 | 0.21 |
| 10 | 1120 | 473 | 0.42 |
| 11 | 263 | 365 | 1.39 |
| 12 | 394 | 310 | 0.79 |
| 13 | 364 | 361 | 0.99 |

### INVENTION EXAMPLES 4 to 11 and COMPARATIVE EXAMPLES 14 to 22

The 0.53% by weight PEDOT/PSS compositions of COMPARATIVE EXAMPLE INVENTION 14, COMPARATIVE EXAMPLES 15 to 22 and INVENTION EXAMPLES 4 to 11 were produced by adding the ingredients given in Table 8 to a 1.15% by weight aqueous dispersion of PEDOT/PSS with a PEDOT:PSS weight ratio of 1:2.46, which was produced under an inert atmosphere such that when said initiator is added less than 3mg of oxygen per litre of said reaction medium is present in said reaction medium as disclosed in WO 03/048227A, in the quantities/100g of composition given in Table 8.

**Table 8:**

| | Comparative Example 14 | Comparative Examples 15 to 22 | Invention Examples 4 to 11 |
|---|---|---|---|
| solid PEDOT/PSS (used as 1.15% by weight aqueous dispersion [g] | 0.527 | 0.527 | 0.527 |
| Zonyl® FSO100 (used as 5% by weight aqueous solution) [g] | 0.05 | 0.05 | 0.05 |
| compound 5 [g] | 0.37 | - | 0.37 |
| polyhydroxy- and/or carboxy group or amide or lactam group containing aliphatic compound or aprotic compound with a dielectric constant ≥ 15 [g] | - | 5.70 | 5.70 |
| deionized water [g] | 99.053 | 93.723 | 93.353 |
| composition [g] | 100 | 100 | 100 |

The compositions of COMPARATIVE EXAMPLES 14 to 22 and INVENTION EXAMPLES 4 to 11 were coated on a 175 µm thick transparent PET sheet provided with subbing layer 1 on the side of the PET sheet being coated with a BRAIVE coater at coating speed 2 with a barcoater giving a wet-layer thickness of 40 µm and the coatings dried for 3 minutes at 130°C. Four strips 45 mm wide were cut from the middle of the coated sheet for surface resistance experiments.

The surface resistances at room temperature were determined by contacting the outermost layer with parallel electrodes each 45 mm long and 45 mm apart capable of forming line contacts with copper electrodes via silver-filled rubber, the electrodes being separated by a teflon insulator. This enables a direct measurement of the surface resistance to be realized. The surface resistance of each fresh untreated strip was performed on two occasions during the measurements and the average recorded for each of the strips together with the average value for all four strips for each composition is given in Table 9 below.

**Table 9:**

| Comparative Example nr. | polyhydroxy-&/or carboxy group or amide or lactam group containing aliphatic compound or aprotic compound with a dielectric constant ≥ 15 | Surface resistance [Ω/square] | | | | |
|---|---|---|---|---|---|---|
| | | strip nr 1 | strip nr 2 | strip nr 3 | strip nr 4 | average |
| 14 | - | 436 | 448 | 525 | 526 | 484 |
| 15 | DEG | 214 | 216 | 216 | 214 | 215 |
| 16 | FA | 227 | 231 | 229 | 231 | 229 |
| 17 | NMP | 332 | 336 | 347 | 348 | 341 |
| 18 | CA | 479 | 487 | 493 | 491 | 487 |
| 19 | CL | 402 | 391 | 387 | 397 | 394 |
| 20 | 2-P | 251 | 247 | 244 | 239 | 245 |
| 21 | DMSO | 221 | 227 | 221 | 221 | 222 |
| 22 | DMAC | 402 | 363 | 376 | 368 | 377 |
| Invention Example nr. | | | | | | |
| 4 | DEG | 220 | 214 | 218 | 212 | 216 |
| 5 | FA | 270 | 268 | 269 | 262 | 267 |
| 6 | NMP | 371 | 337 | 348 | 337 | 348 |
| 7 | CA | 385 | 380 | 372 | 373 | 377 |
| 8 | CL | 355 | 361 | 365 | 344 | 356 |
| 9 | 2-P | 238 | 242 | 241 | 238 | 240 |
| 10 | DMSO | 236 | 232 | 231 | 232 | 233 |
| 11 | DMAC | 397 | 383 | 382 | 337 | 375 |

The surface resistance measurements showed a surprising decrease in the presence of polyhydroxy- and/or carboxy-group or amide or lactam group containing aliphatic compound or aprotic compound with a dielectric constant ≥ 15 for the layers containing compound 5, surprising in view of the known surface resistance lowering effect of compound 5. The results for the layers of INVENTION EXAMPLES 4, 5, 6 and 9 to 11 show that the addition of methyl gallate has no substantial effect upon the surface resistance. The results for the layers of INVENTION EXAMPLES 7 and 8, on the other hand, appear to show a surprising synergetic surface resistance-lowering effect upon the combined used of methyl gallate and carbitol acetate and methyl gallate and caprolactam respectively.

The layers of COMPARATIVE EXAMPLES 14 to 22 and INVENTION EXAMPLES 4 to 11 were subjected to a suntest-exposure for 48 and 96 hours in a SUNTEST CPS+ from Atlas with a low pressure Xenon lamp producing 765 W/m² and having a blackstandard T of 50C and surface resistance measurements carried out on the layers fresh, after 48 and 96 hours exposure in the SUNTEST CPS+ and the results are summarized in Table 10 below:

**Table 10:**

| Comparative Example nr. | Fresh surface resistance [Ω/square] | increase factor after 48h Suntest |
|---|---|---|
| 14 | 484 | 1.13 |
| 15 | 215 | 1.94 |
| 16 | 229 | 1.54 |
| 17 | 341 | 2.67 |
| 18 | 487 | 2.57 |
| 19 | 394 | 3.22 |
| 20 | 245 | 1.81 |
| 21 | 222 | 1.56 |
| 22 | 377 | 1.87 |
| Invention Example nr. | | |
| 4 | 216 | 1.12 |
| 5 | 267 | 0.91 |
| 6 | 348 | 1.12 |
| 7 | 377 | 1.19 |
| 8 | 356 | 1.19 |
| 9 | 240 | 1.14 |
| 10 | 233 | 1.24 |
| 11 | 375 | 1.18 |

The SUNTEST-results show that methyl gallate very strongly stabilized to UV-irradiation PEDOT:PSS-containing compositions with all the polyhydroxy- and/or carboxy group or amide or lactam group containing aliphatic compounds and aprotic compounds with a dielectric constant ≥ 15.

The surface resistances of the layers of COMPARATIVE EXAMPLES 1 and 14 to 22 and INVENTION EXAMPLES 4 to 11 after 10 days in 95% relative humidity at 60°C are summarized in Table 11 below.

The results show that methyl gallate very strongly stabilized against the effects of high humidity and temperature the PEDOT:PSS-containing compositions with all the polyhydroxy- and/or carboxy group or amide or lactam group containing aliphatic compounds and aprotic compounds with a dielectric constant ≥ 15.

**Table 11:**

| Comparative Example nr. | Fresh surface resistance [Ω/square] | increase factor after 10 days in 95% relative humidity at 60°C |
|---|---|---|
| 14 | 484 | 0.76 |
| 15 | 215 | 1.59 |
| 16 | 229 | 1.33 |
| 17 | 341 | 1.51 |
| 18 | 487 | 1.30 |
| 19 | 394 | 1.26 |
| 20 | 245 | 1.53 |
| 21 | 222 | 1.44 |
| 22 | 377 | 1.52 |
| Invention Example nr. | | |
| 4 | 216 | 1.30 |
| 5 | 267 | 0.98 |
| 6 | 348 | 0.91 |
| 7 | 377 | 0.79 |
| 8 | 356 | 0.84 |
| 9 | 240 | 1.20 |
| 10 | 233 | 1.19 |
| 11 | 375 | 0.82 |

### INVENTION EXAMPLES 12 to 15

The 0.53% by weight PEDOT/PSS compositions of INVENTION EXAMPLES 12 to 15 were produced by adding the ingredients given in Table 11 to a 1.15% by weight aqueous dispersion of PEDOT/PSS with a PEDOT:PSS weight ratio of 1:2.46, which was produced under an inert atmosphere such that when said initiator is added less than 3mg of oxygen per litre of said reaction medium is present in said reaction medium as disclosed in WO 03/048227A, in the quantities/100g of composition given in Table 12.

**Table 12:**

| | Invention Examples 12 to 15 |
|---|---|
| solid PEDOT/PSS (used as 1.15% by weight aqueous dispersion) [g] | 0.527 |
| Zonyl® FSO100 (used as 5% by weight aqueous solution) [g] | 0.05 |
| DEG [g] | 5.70 |
| aromatic compound exclusive of sulfo groups and containing at least two hydroxy groups [g] | 0.37 |
| deionized water [g] | 93.353 |
| composition [g] | 100 |

The compositions of INVENTION EXAMPLES 12 to 15 were coated on a 175 µm thick transparent PET sheet provided with subbing layer 1 on the side of the PET sheet being coated with a Braive coater at coating speed 2 with a barcoater giving a wet-layer thickness of 40 µm and the coatings dried for 3 minutes at 130°C. Four strips 45 mm wide were cut from the middle of the coated sheet for surface resistance experiments.

The surface resistances at room temperature were determined by contacting the outermost layer with parallel electrodes each 45 mm long and 45 mm apart capable of forming line contacts with copper electrodes via silver-filled rubber, the electrodes being separated by a teflon insulator. This enables a direct measurement of the surface resistance to be realized. The surface resistance of each fresh untreated strip was performed on two occasions during the measurements and the average recorded for each of the strips together with the average value for all four strips for each composition is given in Table 13 below.

**Table 13:**

| Comparative Example nr. | aromatic compound exclusive of sulfo groups & containing at least two hydroxy groups | Surface resistance [Ω/square] | | | | |
|---|---|---|---|---|---|---|
| | | strip nr 1 | strip nr 2 | strip nr 3 | strip nr 4 | average |
| 14 | compound 5 | 436 | 448 | 525 | 526 | 484 |
| 15 | (DEG) | 214 | 216 | 216 | 214 | 215 |
| Invention Example nr. | | | | | | |
| 4 | compound 5 | 220 | 214 | 218 | 212 | 216 |
| 14 | compound 12 | 217 | 224 | 222 | 219 | 220 |
| 15 | compound 24 | 201 | 201 | 205 | 199 | 201 |

These measurements show a surprising decrease in surface resistance in the presence of diethylene glycol for all of the aromatic compounds exclusive of sulfo groups and containing at least two hydroxy groups evaluated, surprising in view of the known surface resistance lowering effect of such aromatic compounds.

The layers of INVENTION EXAMPLES 12 to 15 were subjected to a suntest-exposure for 48 and 96 hours in a SUNTEST CPS+ from Atlas with a low pressure Xenon lamp producing 765 W/m² and having a blackstandard T of 50C and surface resistance measurements carried out on the layers fresh, after 48 and 96 hours exposure in the SUNTEST CPS+ and the results together with those for the layers of COMPARATIVE EXAMPLE 14 and INVENTION EXAMPLE 4 are summarized in Table 14 below:

**Table 14:**

| Comparative Example nr. | Fresh surface resistance [Ω/square] | increase factor after 48h Suntest | increase factor after 96h Suntest |
|---|---|---|---|
| 15 | 215 | 1.94 | - |
| Invention Example nr. | | | |
| 4 | 216 | 1.12 | - |
| 14 | 220 | 1.12 | 1.24 |
| 15 | 201 | 1.19 | 2.36 |

The benchmark in these stability measurements is the performance of the composition to which the polyhydroxy-aromatic compound has not been added. All the aromatic compounds tested exhibited improved stability over the composition to which the aromatic compound has been added. The layers with methyl gallate, resorcinol, catechol, 3,4-dihydroxybenzoic acid and 3,5-dihydroxybenzoic acid all exhibited high stability under 48h exposure in a SUNTEST CPS+ with particularly high stability being observed with methyl gallate, 3,4-dihydroxybenzoic acid and 3,5-dihydroxybenzoic acid, with the layer of INVENTION EXAMPLE 14 with 3,3-dihydroxybenzoic acid being particularly stable under 96h exposure in a SUNTEST CPS+.

The surface resistances of the layers of INVENTION EXAMPLES 12 to 15 after 10 days in 95% relative humidity at 60°C are summarized in Table 15 below.

The results show that methyl gallate, 3,4-dihydroxybenzoic acid and 3,5-dihydroxybenzoic acid stabilized against the effects of high humidity and temperature PEDOT:PSS-containing compositions with diethylene glycol.

**Table 15:**

| Comparative Example nr. | Fresh surface resistance [Ω/square] | increase factor after 10 days in 95% relative humidity at 60°C |
|---|---|---|
| 15 | 215 | 1.59 |
| Invention Example nr. | | |
| 4 | 216 | 1.30 |
| 14 | 220 | 1.26 |
| 15 | 201 | 1.34 |

In view of the foregoing description it will be evident to a person skilled in the art that various modifications may be made within the scope of the invention.

## Claims

1. A composition exclusive of hydroquinone comprising at least one polymer selected from the group consisting of poly(3,4-methylenedioxy-thiophene), poly(3,4-methylenedioxythiophene) derivatives, poly(3,4-ethylenedioxythiophene), poly(3,4-ethylenedioxy-thiophene) derivatives, poly(3,4-propylene dioxythiophene), poly(3,4-propylenedioxythiophene) derivatives, poly(3,4-butylenedioxythiophene), poly(3,4-butylenedioxythiophene) derivatives and copolymers therewith, a polyanion, at least one aromatic compound exclusive of sulfo groups and containing at least two hydroxy groups selected from polyhydroxy-benzoic acids and at least one polyhydroxy- and/or carboxy group or amide or lactam group containing aliphatic compound selected from the group consisting of diethylene glycol, 1,2-propandiol, glycerol, hexylene glycol, propylene glycol, di(ethylene glycol) ethyl ether acetate, N-methyl-acetamide, N-methyl pyrrolidone and sugar alcohols.

2. A composition exclusive of hydroquinone comprising at least one polymer selected from the group consisting of poly(3,4-methylenedioxy-thiophene), poly(3,4-methylenedioxythiophene) derivatives, poly(3,4-ethylenedioxythiophene), poly(3,4-ethylenedioxy-thiophene) derivatives, poly(3,4-propylene dioxythiophene), poly(3,4-propylenedioxythiophene) derivatives, poly(3,4-butylenedioxythiophene), poly(3,4-butylenedioxythiophene) derivatives and copolymers therewith, a polyanion, at least one aromatic compound exclusive of sulfo groups and containing at least two hydroxy groups selected from the group consisting of pyrogallol, gallic acid esters and polyhydroxy-benzoic acids and at least one polyhydroxy- and/or carboxy group or amide or lactam group containing aliphatic compound selected from the group consisting of diethylene glycol, 1,2-propandiol, hexylene glycol, propylene glycol, di(ethylene glycol) ethyl ether acetate, N-methyl-acetamide, N-methyl pyrrolidone and sugar alcohols.

3. A composition exclusive of hydroquinone comprising at least one polymer selected from the group consisting of poly(3,4-methylenedioxy-thiophene), poly(3,4-methylenedioxythiophene) derivatives, poly(3,4-ethylenedioxythiophene), poly(3,4-ethylenedioxy-thiophene) derivatives, poly(3,4-propylene dioxythiophene), poly(3,4-propylenedioxythiophene) derivatives, poly(3,4-butylenedioxythiophene), poly(3,4-butylenedioxythiophene) derivatives and copolymers therewith, a polyanion, at least one aromatic compound exclusive of sulfo groups and containing at least two hydroxy groups selected from the group consisting of pyrogallol, gallic acid esters and polyhydroxy-benzoic acids and at least one polyhydroxy- and/or carboxy group or amide or lactam group containing aliphatic compound selected from the group consisting of diethylene glycol, formamide and 2-pyrolidone.

4. Composition according to claim 1 to 3, wherein said polymer containing optionally substituted 3,4-alkylenedioxythiophene structural units is poly(3,4-ethylenedioxythiophene).

5. Composition according to any one of claims 1 to 4, wherein said polyanion is poly(styrene sulphonate).

6. A layer configuration on a support, said layer configuration comprising a layer exclusive of hydroquinone comprising at least one polymer selected from the group consisting of poly(3,4-methylenedioxy-thiophene), poly(3,4-methylenedioxythiophene) derivatives, poly(3,4-ethylenedioxythiophene), poly(3,4-ethylenedioxy-thiophene) derivatives, poly(3,4-propylene dioxythiophene), poly(3,4-propylenedioxythiophene) derivatives, poly(3,4-butylenedioxythiophene), poly(3,4-butylene dioxythiophene) derivatives and copolymers therewith, a polyanion, at least one aromatic compound exclusive of sulfo groups and containing at least two hydroxy groups selected from polyhydroxy-benzoic acids and at least one polyhydroxy- and/or carboxy group or amide or lactam group containing aliphatic compound selected from the group consisting of diethylene glycol, 1,2-propandiol, glycerol, hexylene glycol, propylene glycol, di(ethylene glycol) ethyl ether acetate, N-methylacetamide, N-methyl pyrrolidone and sugar alcohols.

7. A layer configuration on a support, said layer configuration comprising a layer exclusive of hydroquinone comprising at least one polymer selected from the group consisting of poly(3,4-methylenedioxy-thiophene), poly(3,4-methylenedioxythiophene) derivatives, poly(3,4-ethylenedioxythiophene), poly(3,4-ethylenedioxy-thiophene) derivatives, poly(3,4-propylene dioxythiophene), poly(3,4-propylenedioxythiophene) derivatives, poly(3,4-butylenedioxythiophene), poly(3,4-butylene dioxythiophene) derivatives and copolymers therewith, a polyanion, at least one aromatic compound exclusive of sulfo groups and containing at least two hydroxy groups selected from the group consisting of pyrogallol, gallic acid esters and polyhydroxy-benzoic acids and at least one polyhydroxy- and/or carboxy group or amide or lactam group containing aliphatic compound selected from the group consisting of diethylene glycol, 1,2-propandiol, hexylene glycol, propylene glycol, di(ethylene glycol) ethyl ether acetate, N-methylacetamide, N-methyl pyrrolidone and sugar alcohols.

8. A layer configuration on a support, said layer configuration comprising a layer exclusive of hydroquinone comprising at least one polymer selected from the group consisting of poly(3,4-methylenedioxy-thiophene), poly(3,4-methylenedioxythiophene) derivatives, poly(3,4-ethylenedioxythiophene), poly(3,4-ethylenedioxy-thiophene) derivatives, poly(3,4-propylene dioxythiophene), poly(3,4-propylenedioxythiophene) derivatives, poly(3,4-butylenedioxythiophene), poly(3,4-butylene dioxythiophene) derivatives and copolymers therewith, a polyanion, at least one aromatic compound exclusive of sulfo groups and containing at least two hydroxy groups selected from the group consisting of pyrogallol, gallic acid esters and polyhydroxy-benzoic acids and at least one polyhydroxy- and/or carboxy group or amide or lactam group containing aliphatic compound selected from the group consisting of diethylene glycol, formamide and 2-pyrolidone.

9. Layer configuration according to claim 6 to 8, wherein said polymer containing optionally substituted 3,4-alkylenedioxythiophene structural units is poly(3,4-ethylenedioxythiophene).

10. Layer configuration according to any one of claims 6 to 9, wherein said polyanion is poly(styrene sulphonate).

11. Layer configuration according to any one of claims 6 to 10, wherein said layer configuration is selected from the following list: a light emitting diode, a photovoltaic device, a solar cell, a transistor, an electroluminescent device, a touch screen, an e-paper configuration.

## Patentansprüche

1. Eine Zusammensetzung ohne Hydrochinon, enthaltend mindestens ein Polymer, ausgewählt aus der Gruppe bestehend aus Poly-(3,4-methylendioxythiophen), Poly-(3,4-methylendioxythiophen)-Derivaten, Poly-(3,4-ethylendioxythiophen), Poly-(3,4-ethylendioxythiophen)-Derivaten, Poly-(3,4-propylendioxythiophen), Poly-(3,4-propylendioxythiophen)-Derivaten, Poly-(3,4-butylendioxythiophen), Poly-(3,4-butylendioxythiophen)-Derivaten und Copolymeren derselben, ein Polyanion, mindestens eine aromatische Verbindung ohne Sulfogruppen und mit mindestens zwei Hydroxygruppen ausgewählt aus Polyhydroxybenzoesäuren und mindestens eine eine Polyhydroxy- und/oder Carboxygruppe oder Amid- oder Lactamgruppe enthaltende aliphatische Verbindung, ausgewählt aus der Gruppe bestehend aus Diethylenglycol, 1,2-Propandiol, Glycerol, Hexylenglycol, Propylenglycol, Di(ethylenglycol)-ethyletheracetat, N-Methylacetamid, N-Methylpyrrolidon und Zuckeralkoholen.

2. Eine Zusammensetzung ohne Hydrochinon, enthaltend mindestens ein Polymer, ausgewählt aus der Gruppe bestehend aus Poly-(3,4-methylendioxythiophen), Poly-(3,4-methylendioxythiophen)-Derivaten, Poly-(3,4-ethylendioxythiophen), Poly-(3,4-ethylendioxythiophen)-Derivaten, Poly-(3,4-propylendioxythiophen), Poly-(3,4-propylendioxythiophen)-Derivaten, Poly-(3,4-butylendioxythiophen), Poly-(3,4-butylendioxythiophen)-Derivaten und Copolymeren derselben, ein Polyanion, mindestens eine aromatische Verbindung ohne Sulfogruppen und mit mindestens zwei Hydroxygruppen ausgewählt aus der Gruppe bestehend aus Pyrogallol, Gallussäurestern und Polyhydroxybenzoesäuren und mindestens eine eine Polyhydroxy- und/oder Carboxygruppe oder Amid- oder Lactamgruppe enthaltende aliphatische Verbindung, ausgewählt aus der Gruppe bestehend aus Diethylenglycol, 1,2-Propandiol, Hexylenglycol, Propylenglycol, Di(ethylenglycol)-ethyletheracetat, N-Methylacetamid, N-Methylpyrrolidon und Zuckeralkoholen.

3. Eine Zusammensetzung ohne Hydrochinon, enthaltend mindestens ein Polymer, ausgewählt aus der Gruppe bestehend aus Poly-(3,4-methylendioxythiophen), Poly-(3,4-methylendioxythiophen)-Derivaten, Poly-(3,4-ethylendioxythiophen), Poly-(3,4-ethylendioxythiophen)-Derivaten, Poly-(3,4-propylendioxythiophen), Poly-(3,4-propylendioxythiophen)-Derivaten, Poly-(3,4-butylendioxythiophen), Poly-(3,4-butylendioxythiophen)-Derivaten und Copolymeren derselben, ein Polyanion, mindestens eine aromatische Verbindung ohne Sulfogruppen und mit mindestens zwei Hydroxygruppen ausgewählt aus der Gruppe bestehend aus Pyrogallol, Gallussäurestern und Polyhydroxybenzoesäuren und mindestens eine eine Polyhydroxy- und/oder Carboxygruppe oder Amid- oder Lactamgruppe enthaltende aliphatische Verbindung, ausgewählt aus der Gruppe bestehend aus Diethylenglycol, Formamid und 2-Pyrrolidon.

4. Zusammensetzung nach Anspruch 1 bis 3, wobei das gegebenenfalls substituierte 3,4-Alkylendioxythiophen-Struktureinheiten enthaltende Polymer Poly-(3,4-ethylendioxythiophen) ist.

5. Zusammensetzung nach einem der Ansprüche 1 bis 4, wobei das Polyanion Poly(styrolsulfonat) ist.

6. Eine Schichtkonfiguration auf einem Träger, wobei die Schichtkonfiguration eine Schicht ohne Hydrochinon umfasst, enthaltend mindestens ein Polymer, ausgewählt aus der Gruppe bestehend aus Poly-(3,4-methylendioxythiophen), Poly-(3,4-methylendioxythiophen)-Derivaten, Poly-(3,4-ethylendioxythiophen), Poly-(3,4-ethylendioxythiophen)-Derivaten, Poly-(3,4-propylendioxythiophen), Poly-(3,4-propylendioxythiophen)-Derivaten, Poly-(3,4-butylendioxythiophen), Poly-(3,4-butylendioxythiophen)-Derivaten und Copolymeren derselben, ein Polyanion, mindestens eine aromatische Verbindung ohne Sulfogruppen und mit mindestens zwei Hydroxygruppen ausgewählt aus Polyhydroxybenzoesäuren und mindestens eine eine Polyhydroxy- und/oder Carboxygruppe oder Amid- oder Lactamgruppe enthaltende aliphatische Verbindung, ausgewählt aus der Gruppe bestehend aus Diethylenglycol, 1,2-Propandiol, Glycerol, Hexylenglycol, Propylenglycol, Di(ethylenglycol)-ethyletheracetat, N-Methylacetamid, N-Methylpyrrolidon und Zuckeralkoholen.

7. Eine Schichtkonfiguration auf einem Träger, wobei die Schichtkonfiguration eine Schicht ohne Hydrochinon umfasst, enthaltend mindestens ein Polymer, ausgewählt aus der Gruppe bestehend aus Poly-(3,4-methylendioxythiophen), Poly-(3,4-methylendioxythiophen)-Derivaten, Poly-(3,4-ethylendioxythiophen), Poly-(3,4-ethylendioxythiophen)-Derivaten, Poly-(3,4-propylendioxythiophen), Poly-(3,4-propylendioxythiophen)-Derivaten, Poly-(3,4-butylendioxythiophen), Poly-(3,4-butylendioxythiophen)-Derivaten und Copolymeren derselben, ein Polyanion, mindestens eine aromatische Verbindung ohne Sulfogruppen und mit mindestens zwei Hydroxygruppen ausgewählt aus der Gruppe bestehend aus Pyrogallol, Gallussäurestern und Polyhydroxybenzoesäuren und mindestens eine eine Polyhydroxy- und/oder Carboxygruppe oder Amid- oder Lactamgruppe enthaltende aliphatische Verbindung, ausgewählt aus der Gruppe bestehend aus Diethylenglycol, 1,2-Propandiol, Hexylenglycol, Propylenglycol, Di(ethylenglycol)-ethyletheracetat, N-Methylacetamid, N-Methylpyrrolidon und Zuckeralkoholen.

8. Eine Schichtkonfiguration auf einem Träger, wobei die Schichtkonfiguration eine Schicht ohne Hydrochinon umfasst, enthaltend mindestens ein Polymer, ausgewählt aus der Gruppe bestehend aus Poly-(3,4-methylendioxythiophen), Poly-(3,4-methylendioxythiophen)-Derivaten, Poly-(3,4-ethylendioxythiophen), Poly-(3,4-ethylendioxythiophen)-Derivaten, Poly-(3,4-propylendioxythiophen), Poly-(3,4-propylendioxythiophen)-Derivaten, Poly-(3,4-butylendioxythiophen), Poly-(3,4-butylendioxythiophen)-Derivaten und Copolymeren derselben, ein Polyanion, mindestens eine aromatische Verbindung ohne Sulfogruppen und mit mindestens zwei Hydroxygruppen ausgewählt aus der Gruppe bestehend aus Pyrogallol, Gallussäurestern und Polyhydroxybenzoesäuren und mindestens eine eine Polyhydroxy- und/oder Carboxygruppe oder Amid- oder Lactamgruppe enthaltende aliphatische Verbindung, ausgewählt aus der Gruppe bestehend aus Diethylenglycol, Formamid und 2-Pyrrolidon.

9. Schichtkonfiguration nach Anspruch 6 bis 8, wobei das gegebenenfalls substituierte 3,4-Alkylendioxythiophen-Struktureinheiten enthaltende Polymer Poly-(3,4-ethylendioxythiophen) ist.

10. Schichtkonfiguration nach einem der Ansprüche 6 bis 9, wobei das Polyanion Poly(styrolsulfonat) ist.

11. Schichtkonfiguration nach einem der Ansprüche 6 bis 10, wobei die Schichtkonfiguration aus folgender Liste gewählt wird : eine lichtemittierende Diode, ein fotovoltaisches Gerät, eine Solarzelle, ein Transistor, ein elektrolumineszentes Gerät, ein Touchscreen und eine E-Paper-Konfiguration.

## Revendications

1. Composition sans hydroquinone, contenant au moins un polymère choisi parmi le groupe composé de poly-(3,4-méthylènedioxy-thiophène), de dérivés de poly-(3,4-méthylènedioxy-thiophène), de poly-(3,4-éthylènedioxy-thiophène), de dérivés de poly-(3,4-éthylènedioxy-thiophène), de poly-(3,4-propylènedioxy-thiophène), de dérivés de poly-(3,4-propylènedioxy-thiophène), de poly-(3,4-butylènedioxy-thiophène), de dérivés de poly-(3,4-butylènedioxy-thiophène) et de copolymères de ceux-ci, un polyanion, au moins un composé aromatique sans groupes sulfo et comprenant au moins deux groupes hydroxy choisis parmi des acides polyhydroxybenzoïques et au moins un composé aliphatique comprenant un groupe polyhydroxy et/ou groupe carboxy ou groupe amide ou groupe lactame choisi parmi le groupe composé de diéthylèneglycol, de 1,2-propanediol, de glycérol, d'hexylèneglycol, de propylèneglycol, d'acétate d'éther di(éthylèneglycol)-éthylique, de N-méthylacétamide, de N-méthylpyrrolidone et de polyalcools.

2. Composition sans hydroquinone, contenant au moins un polymère choisi parmi le groupe composé de poly-(3,4-méthylènedioxy-thiophène), de dérivés de poly-(3,4-méthylènedioxy-thiophène), de poly-(3,4-éthylènedioxy-thiophène), de dérivés de poly-(3,4-éthylènedioxy-thiophène), de poly-(3,4-propylènedioxy-thiophène), de dérivés de poly-(3,4-propylènedioxy-thiophène), de poly-(3,4-butylènedioxy-thiophène), de dérivés de poly-(3,4-butylènedioxy-thiophène) et de copolymères de ceux-ci, un polyanion, au moins un composé aromatique sans groupes sulfo et comprenant au moins deux groupes hydroxy choisis parmi le groupe composé de pyrogallol, d'esters d'acide gallique et d'acides polyhydroxybenzoïques et au moins un composé aliphatique comprenant un groupe polyhydroxy et/ou groupe carboxy ou groupe amide ou groupe lactame choisi parmi le groupe composé de diéthylèneglycol, de 1,2-propanediol, d'hexylèneglycol, de propylèneglycol, d'acétate d'éther di(éthylèneglycol)-éthylique, de N-méthylacétamide, de N-méthylpyrrolidone et de polyalcools.

3. Composition sans hydroquinone, contenant au moins un polymère choisi parmi le groupe composé de poly-(3,4-méthylènedioxy-thiophène), de dérivés de poly-(3,4-méthylènedioxy-thiophène), de poly-(3,4-éthylènedioxy-thiophène), de dérivés de poly-(3,4-éthylènedioxy-thiophène), de poly-(3,4-propylènedioxy-thiophène), de dérivés de poly-(3,4-propylènedioxy-thiophène), de poly-(3,4-butylènedioxy-thiophène), de dérivés de poly-(3,4-butylènedioxy-thiophène) et de copolymères de ceux-ci, un polyanion, au moins un composé aromatique sans groupes sulfo et comprenant au moins deux groupes hydroxy choisis parmi le groupe composé de pyrogallol, d'esters d'acide gallique et d'acides polyhydroxybenzoïques et au moins un composé aliphatique comprenant un groupe polyhydroxy et/ou groupe carboxy ou groupe amide ou groupe lactame choisi parmi le groupe composé de diéthylèneglycol, de formamide et de 2-pyrrolidone.

4. Composition selon la revendication 1 à 3, **caractérisée en ce que** ledit polymère comprenant des motifs structuraux de 3,4-alkylènedioxy-thiophène éventuellement substitués est le poly-(3,4-éthylènedioxy-thiophène).

5. Composition selon l'une quelconque des revendications 1 à 4, **caractérisée en ce que** le polyanion est le poly(styrène-sulfonate).

6. Configuration de couche appliquée sur un support, ladite configuration de couche comprenant une couche sans hydroquinone contenant au moins un polymère choisi parmi le groupe composé de poly-(3,4-méthylènedioxy-thiophène), de dérivés de poly-(3,4-méthylènedioxy-thiophène), de poly-(3,4-éthylènedioxy-thiophène), de dérivés de poly-(3,4-éthylènedioxy-thiophène), de poly-(3,4-propylènedioxy-thiophène), de dérivés de poly-(3,4-propylènedioxy-thiophène), de poly-(3,4-butylènedioxy-thiophène), de dérivés de poly-(3,4-butylènedioxy-thiophène) et de copolymères de ceux-ci, un polyanion, au moins un composé aromatique sans groupes sulfo et comprenant au moins deux groupes hydroxy choisis parmi des acides polyhydroxybenzoïques et au moins un composé aliphatique comprenant un groupe polyhydroxy et/ou groupe carboxy ou groupe amide ou groupe lactame choisi parmi le groupe composé de diéthylèneglycol, de 1,2-propanediol, de glycérol, d'hexylèneglycol, de propylèneglycol, d'acétate d'éther di(éthylèneglycol)-éthylique, de N-méthylacétamide, de N-méthylpyrrolidone et de polyalcools.

7. Configuration de couche appliquée sur un support, ladite configuration de couche comprenant une couche sans hydroquinone contenant au moins un polymère choisi parmi le groupe composé de poly-(3,4-méthylènedioxy-thiophène), de dérivés de poly-(3,4-méthylènedioxy-thiophène), de poly-(3,4-éthylènedioxy-thiophène), de dérivés de poly-(3,4-éthylènedioxy-thiophène), de poly-(3,4-propylènedioxy-thiophène), de dérivés de poly-(3,4-propylènedioxy-thiophène), de poly-(3,4-butylènedioxy-thiophène), de dérivés de poly-(3,4-butylènedioxy-thiophène) et de copolymères de ceux-ci, un polyanion, au moins un composé aromatique sans groupes sulfo et comprenant au moins deux groupes hydroxy choisis parmi le groupe composé de pyrogallol, d'esters d'acide gallique et d'acides polyhydroxybenzoïques et au moins un composé aliphatique comprenant un groupe polyhydroxy et/ou groupe carboxy ou groupe amide ou groupe lactame choisi parmi le groupe composé de diéthylèneglycol, de 1,2-propanediol, d'hexylèneglycol, de propylèneglycol, d'acétate d'éther di(éthylèneglycol)-éthylique, de N-méthylacétamide, de N-méthylpyrrolidone et de polyalcools.

8. Configuration de couche appliquée sur un support, ladite configuration de couche comprenant une couche sans hydroquinone contenant au moins un polymère choisi parmi le groupe composé de poly-(3,4-méthylènedioxy-thiophène), de dérivés de poly-(3,4-méthylènedioxy-thiophène), de poly-(3,4-éthylènedioxy-thiophène), de dérivés de poly-(3,4-éthylènedioxy-thiophène), de poly-(3,4-propylènedioxy-thiophène), de dérivés de poly-(3,4-propylènedioxy-thiophène), de poly-(3,4-butylènedioxy-thiophène), de dérivés de poly-(3,4-butylènedioxy-thiophène) et de copolymères de ceux-ci, un polyanion, au moins un composé aromatique sans groupes sulfo et comprenant au moins deux groupes hydroxy choisis parmi le groupe composé de pyrogallol, d'esters d'acide gallique et d'acides polyhydroxybenzoïques et au moins un composé aliphatique comprenant un groupe polyhydroxy et/ou groupe carboxy ou groupe amide ou groupe lactame choisi parmi le groupe composé de diéthylèneglycol, de formamide et de 2-pyrrolidone.

9. Configuration de couche selon l'une quelconque des revendications 6 à 8, **caractérisée en ce que** ledit polymère comprenant des motifs structuraux de 3,4-alkylènedioxy-thiophène éventuellement substitués est le poly-(3,4-éthylènedioxy-thiophène).

10. Configuration de couche selon l'une quelconque des revendications 6 à 9, **caractérisée en ce que** le polyanion est le poly(styrène-sulfonate).

11. Configuration de couche selon l'une quelconque des revendications 6 à 10, **caractérisée en ce que** la configuration de couche est choisie parmi la liste suivante : une diode électroluminescente, un dispositif photovoltaïque, une cellule solaire, un transistor, un dispositif électroluminescent, un écran tactile et une configuration de papier électronique.
